# EUROPEAN PATENT SPECIFICATION

(11) **EP 0 816 023 B1**
(45) Date of publication and mention of the grant of the patent: **27.10.1999**
(21) Application number: 97304417.5
(22) Date of filing: 24.06.1997
(51) Int. Cl.: B25J 7/00

(54) **Micromanipulator fine control apparatus**
Feineinstellungseinrichtung für Mikromanipulator
Dispositif de réglage fin pour micromanipulateur

(30) Priority: 25.06.1996 JP 16419396
(43) Date of publication of application: 07.01.1998
(73) Proprietor: Narishige Co., Ltd., Tokyo 157 (JP)
(72) Inventor: Yoneyama, Shinji, Tokyo 157 (JP)
(74) Representative: Sanderson, Michael John

(56) References cited:
- GB-A- 2 186 706
- US-A- 3 204 584
- US-A- 4 946 329

## Description

The present invention relates to a micromanipulator fine control apparatus such as glass electrode or the like by remote control of hydraulic pressure or the like under a microscope.

A micromanipulator fine remote control apparatus according to the preamble of claim 1 is known from US-A-4 946 329.

In the field of basic medical science or biotechnology, micromanipulator to treat cells in various manners such as retaining, suctioning, pouring, dividing, or the like for organ or cellular structure of creature, egg cell, or the like have been offered. The micromanipulator is finely controlled for the treatment of cells under microscope.

However, when an operator directly touches an operation handle of the micromanipulator in actual operation, trembling of his fingers is transmitted to the micromanipulator in magnified degree. The operator is required his utmost care and skillfulness in operation. Nowadays a finely remote controllable micromanipulator is appeared by applying hydraulic pressure.

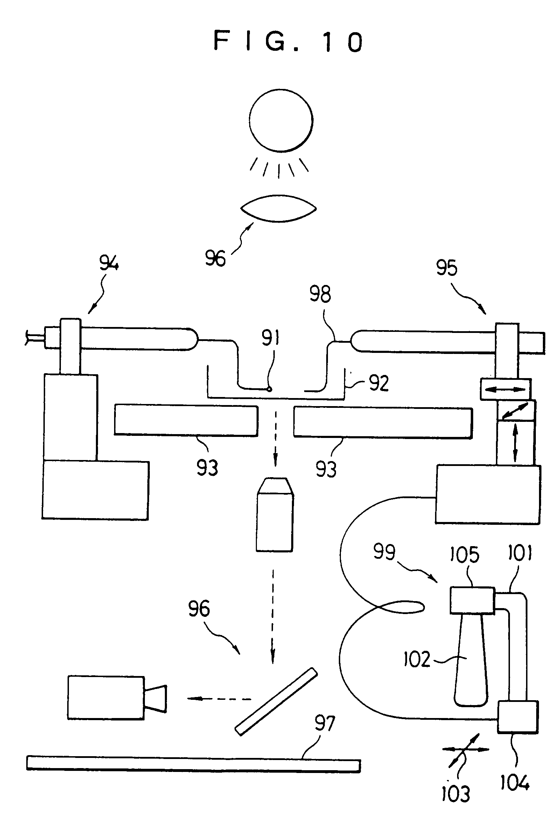

Fig.10 is an instruction drawing to briefly explain composition of a conventional cells treatment apparatus.

In Fig.10, reference numeral 91 indicates egg cells. Reference numeral 93 indicates a stage on which a petri dish 92 including a testing liquid for the egg cells 91 is placed. The egg cells 91 are dipped in the testing liquid in the petri dish 92. Reference numeral 94 indicates a fixed supporting part to keep the egg cells 91. The fixed supporting part 94 includes a micromanipulator 95 to perform treatment for egg cells. The fixed supporting part 94 also includes a lighting system 96 to observe illuminated image of the egg cells 91. The egg cells treatment apparatus comprises all of the above mentioned parts integrally. The egg cells treatment apparatus is placed on a vibration proof mat 97.

The micromanipulator 95 is provided with a microtool 98 such as a glass electrode or the like specifically prepared for egg cells treatment. The foremost end of the micromanipulator 95 is provided with a three-dimensional displacement mechanism to move the foremost end in three-dimensional directions. An operator treats the three-dimensional displacement mechanism by means of hydraulic pressure generated by a joystick 99.

The joystick 99 is formed such that an operation handle 102 is suspended from the foremost end of a supporting frame 101 and the joystick 99 rocks in two horizontal directions 103 crossing at right angle as indicated by arrow. The rocking motion of the joystick 99 is transmitted to the three-dimensional displacement mechanism through a transmission part 104 by means of hydraulic pressure.

The operation handle 102 is provided with a conversion part 105 to convert the rocking motion of two horizontal directions 103 to mechanical displacement in horizontal plane. The conversion part 105 is provided at a position where said conversion part 105 is connected to the supporting frame 101.

There was a type to provide the operation handle 105 uprighrt from the conversion part 105 but nowadays a pattern of suspended type joystick has been preferably applied in most cases.

In conventional apparatus, when the cells are treated in vertical direction in the three-dimensional displacement mechanism, a mechanism of fine control in vertical direction has been provided near said three -dimensional displacement mechanism.

However, in the system comprising the three-dimensional displacement mechanism operated by a fine control joystick by means of hydraulic pressure, the operator displaces the operation handle of the joystick in desirable direction to displace the foremost tip end of a microtool disposed in micromanipulator observing the cells to be treated through a microscope. The operator must have a sense to displace the microtool of the micromanipulator in horizontal plane while slanting the operation handle of the joystick. The operator has somewhat confusible sense in practical operation. This has been a sensitive problem in practical operation.

The present invention has been made with the foregoing background in mind. The present invention does not apply the joystick but it offers a fine control operation apparatus which moves an operation handle in horizontal plane and yet resolves the aforementioned problems.

The present invention includes the features of claim 1.

Further developments of the invention are the subject-matter of the dependent claims.
Fig. 1 is a perspective view indicating a fine control apparatus mounted on a micromanipulator according to an embodiment of the present invention.
Fig. 2 is a perspective view of a base plate of the micromanipulator embodying the present invention.
Fig. 3 is a disassembled perspective view of a left to right direction fine control lever.
Fig. 4 is a disassembled perspective view of a front to rear direction fine control lever.
Fig. 5 is a disassembled perspective view indicating a slider plate of a micromanipulator according to a preferred form of the present invention.
Fig. 6 is a disassembled perspective view of a left to right direction fine control operation mechanism and front to rear direction fine control operation mechanism.
Fig. 7 is a disassembled perspective view of upper and lower fine control operation mechanism.
Fig. 8 is an exploded perspective view of a micromanipulator.
Fig. 9 is an operation instruction view of the micromanipulator fine control according to an embodiment of the present invention.
Fig.10 is an instruction view to explain briefly construction of conventional egg cells treating apparatus.

Now an example of micromanipulator fine control apparatus according to the present invention is explained with accompanied drawings.

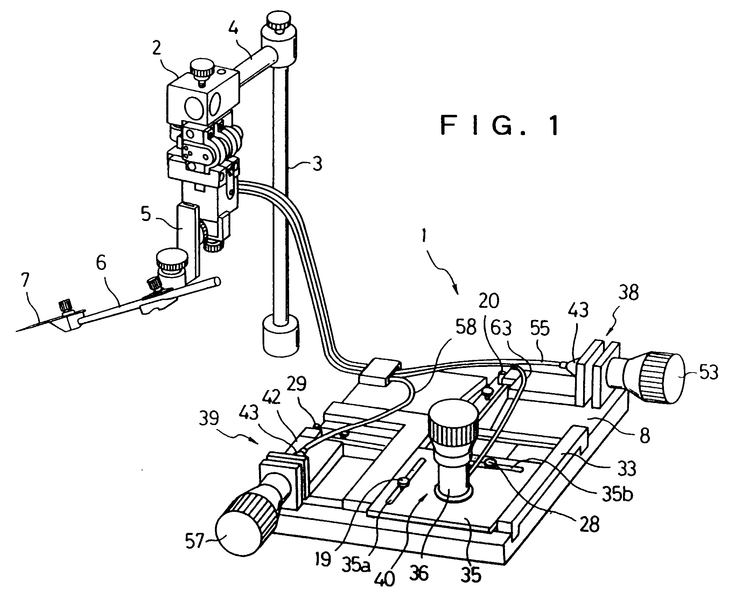

Fig. 1 is a perspective view indicating a setting condition of a micromanipulator fine control apparatus according to an embodiment of the present invention mounted on a three-dimensional liquid pressure micromanipulator 2 (hereinafter indicated as only micromanipulator). The micromanipulator 2 is fixedly held to a fitting bar 4 held by a supporting pole 3. Further, the micromanipulator 2 supports a glass electrode 7 by means of a tightening element 5 and a holder 6.

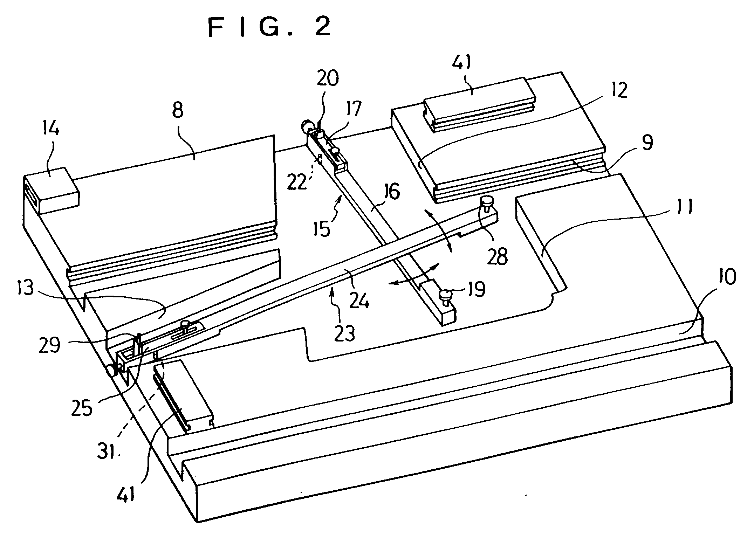

Fig. 2 is a perspective view of a base plate of the micromanipulator fine control apparatus according to the present invention. As shown by the figure, the micromanipulator fine control apparatus 1 (Fig.1) has a base plate 8. The base plate 8 is provided with grooves 9 and 10 having a predetermined distance extending in left to right direction in parallel. Also, a recessed part 11 of almost square shape is engraved nearly at central part of the part surrounded by the grooves 9 and 10. A recessed part 12 for a lever is also engraved in rearward direction from the recessed part 11. (In Fig.2 the recessed part 12 is shown at upper part of the recessed part 11.) Another recessed part 13 of triangle shape for another lever is engraved at left side part in Fig.2. Namely, the recessed part 11, the groove 9, the recessed part 12 for the lever and another recessed part 13 for another lever are communicated. Reference numeral 14 indicates a hose holder to support hoses.

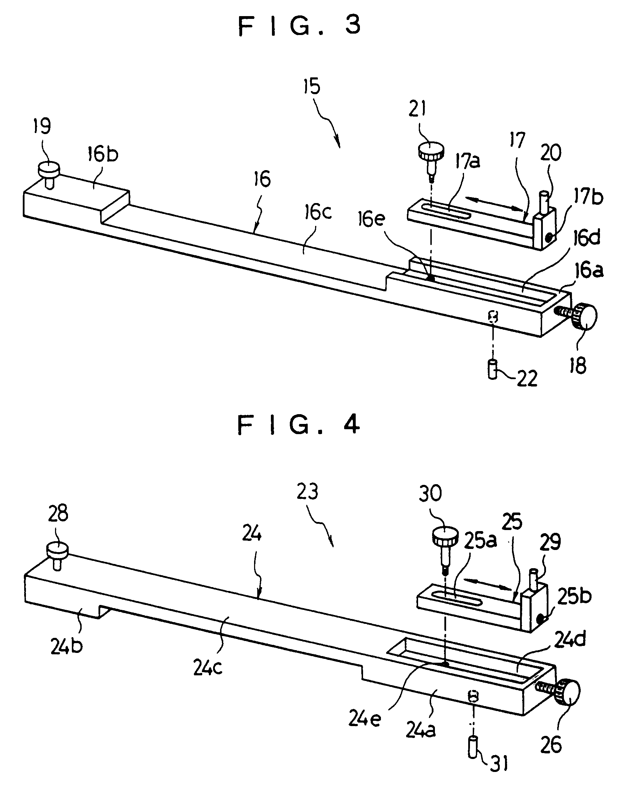

Also, a lever 15 for left and right fine control is rotatively supported making a pin 22 as a supporting point in the recessed part 12 and recessed part 11 for the levers. The left and right fine control lever 15 is, as shown in Fig.3, comprised a main lever 16 (a second lever) and fine control ratio adjuster 17. The main lever 16 has a base end 16a at pin 22 side, tip end 16b and a connecting portion 16c which connects the base end 16a and a lower part of the tip part 16b. On the upper part of the base part 16a of the main lever 16 there is provided with a groove 16d engraved in longitudinal direction and tip end side thereof opened. A screwed hole 16e is provided at the top portion of the groove 16d. The groove 16d is provided with a screwed hole at its rear face thereof. A fine control ratio adjustment screw 18 is fitted in the screwed hole. Further, on the upper surface of the top portion 16b of the main lever 16 is vertically provided with a guide pin 19.

The fine control ratio adjuster 17 is fitted slidably in the longitudinal direction in the groove 16d of the main lever 16.The fine control ratio adjuster 17 has a through slot 17a at its top end and a screwed hole 17b to fit the fine control ratio adjustment screw 18 at its rear end lower portion. There is provided a working rod 20 vertically at its rear end upper portion.

An axial part of the setting screw bolt 21 is inserted in the through slot 17a of the fine control ratio adjuster 17, the top end of the setting bolt 21 is fitted in the screwed hole 16e. The fine control ratio adjuster 17 is slidable by the setting bolt 21 and the main lever 16 in the through slot 17a. When the setting bolt 21 is tightened the fine control ratio adjuster 17 is fitted against the lever 16 by means of bolt head of the setting bolt 21.

The pin 22 embedded in the base plate 8 at its base end is inserted in the hole engraved at lower surface of the base part 16a of the main lever 16, the main lever 16 being rotatively supported by the pin 22.

Accordingly, loosen the setting bolt 21 to rotate the fine control ratio adjustment screw 18 to move the fine control ratio adjuster 17 in the through slot 17a, and adjust the fine control ratio of the left and right direction. Next, the setting bolt 21 is tightened, and the fine control ratio adjuster 17 is set with respect to the main lever 16.

In this occasion, fine control ratio is increased as a distance between the pin 22 and the working bar 20 is widened. Whereas, the fine control ratio is decreased as the distance between the pin 22 and the working bar 20 is decreased.

As indicated in Fig.2, a front and rear direction fine control lever 23 is rotatively supported by a pin 31 in the recessed part 13 of triangle shape and the recessed part 11 of almost square shape. The front and rear direction fine control lever 23 comprises, as shown in FIG 4, a main lever 24 (a first lever) and a first fine control ratio adjuster 25. The main lever 24 comprises a base part 24a of pin 31 side, the other end part 24b and a connecting part 24c. A groove 24d is provided in longitudinal direction on upper surface of the base part 24a of the main lever 24. The groove 24d is provided with a screwed hole 24e at tip end part. The groove 24d is also provided at the rear surface thereof a screwed hole and the screwed hole is fitted with a fine control ratio adjustment screw 26. Further, a guide pin 28 is vertically provided at the upper surface of the end part 24b.

The first fine control ratio adjuster 25 is fitted slidably in the longitudinal direction in the groove 24d of the main lever 24. A through slot 25a is provided at the tip end of the fine control ratio adjuster 25. Said first fine control ratio adjuster 25 has a screwed hole 25b to fit said fine control ratio adjustment screw 26 at lower end and a working bar 29 is vertically provided at rear end upper portion.

An axial part of a setting bolt 30 is inserted to said through slot 25a of the first fine control ratio adjuster 25. Said first fine control ratio adjuster 25 is fitted to the screwed hole 24e. Said fine control ratio adjuster 25 is slidable with respect to the setting bolt 30 and the main lever 24 within the through slot 25a. When setting bolt 30 is tightened the fine control ratio adjuster 25 is set with respect to the main lever 24 by means of the head of the setting bolt 30.

The pin 31 embedded in the base plate 8 at its base end is inserted in the hole provided at lower surface of a base part 24a of the main lever 24. The main lever 24 is rotatively supported by said pin 31.

Accordingly, loosen the fixing bolt 30 and the fine control ratio adjustment screw 26 to move the fine control ratio adjuster 25 from the through slot 25a. Fine control in forward and backward directions is adjusted. Then tighten the setting bolt 30 and the fine control ratio adjuster 25 is set with respect to the main lever 24.

The fine control ratio is enlarged as the distance between the pin 31 and the working bar 29 is widened. The fine control ratio is decreased as the distance between the pin 31 and the working bar 29 is decreased. The main lever 16 and the main lever 24 are crossable each other at the connecting part 16c and the connecting bar 24c. Both levers are not disturbed their rotative motions. (Refer to Fig.2).

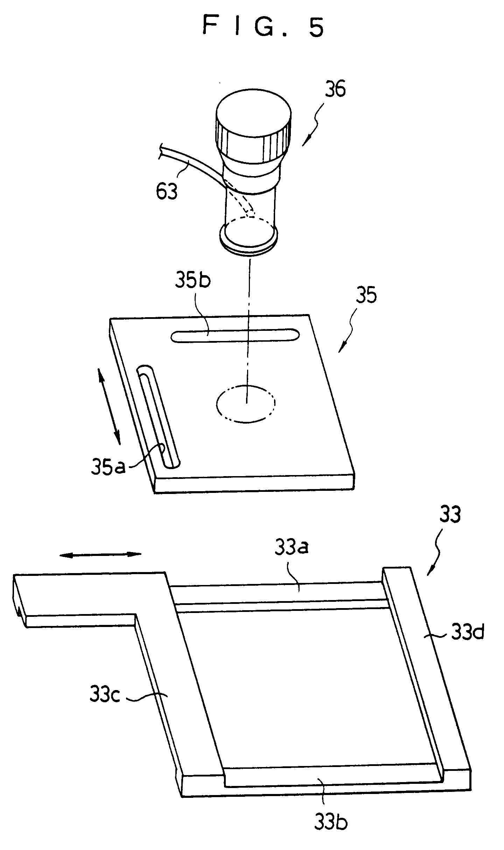

Fig.5 is a disassembled perspective view of the slide plate part of the micromanipulator fine control apparatus. As indicated in Fig.5, a slide frame 33 is provided with sliding parts 33a, 33b which are slidably fitted to the groove 9 and the groove 10 of said base plate 8 at its lower part. The slide frame 33 has a predetermined distance in left to right direction connecting said slider part 33a and 33b. Said slide frame 33 has guide parts 33c and 33d extended to front and rear directions. Said slide frame 33 is movably mounted in left and right directions on the base plate 6.

There is provided a slide plate 35 slidably mounted in front and rear directions between the guide parts 33c and 33d of the slide frame 33. A through slot 35a (second slot) extended in front to rear direction is provided near left side of the side plate 35. There is also provided a through slot 35b (first slot) extended in left to right direction is provided near upper side of the slide plate 35.

An axial part of a guide pin 19 of said left and right directions fine control lever 15 is inserted in the through slot 35a. The axial art is set by means of the head of the guide pin 19. An axial part of a guide pin 28 of said front and rear directions fine control lever 23 is inserted in the through slot 35b. The axial part is set by means of the head of the guide pin 28.

There is vertically provided an operation bar 36 substantially in the center of the slide plate 35. The operation bar concurrently acts as an upper and lower fine control operation mechanism.

Next, left and right directions fine control mechanism 38 which contacts to the working bar 20 of the left and right directions fine control lever 15 is explained.

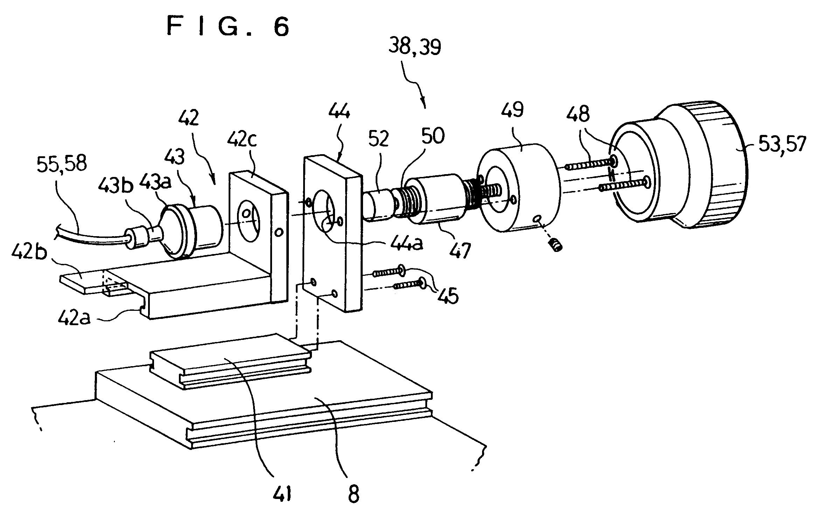

Fig.6 is a disassembled perspective view of the left and right and front and rear directions fine control mechanism. As shown by that figure, an inside slider 41 of flat plate shape extended left to right direction is fixedly mounted at right side of the recessed part 12 near the rear end of the base plate 6. An outside slider 42 has a recessed groove 42a which is provided in downward direction at lower face and a protruded part 42c contacting to a working bar 20 of the left and right directions fine control lever 15 at rear end part and a supporting part 42c extended upward at right side.

A cylinder supporting plate 42c has an annular through hole. The annular through hole is fitted with a hydraulic cylinder 43. Through the circumferential edge of said through hole is contacted with a flange part 43c of the hydraulic cylinder 43. Said hydraulic cylinder 43 presents a cylindrical state with its one end opened and has a flange 43a at circumferential edge and a hose fitting claw part 43b at its closed side of the cylinder. A piston 52 is slidably fitted in the hydraulic cylinder 43. There is formed a hydraulic chamber between the hydraulic cylinder 43 and the piston 52.

Accordingly, an outside slider 42 and the hydraulic cylinder 43 are integrally formed movably in left and right directions together.

The lower part of a handle supporting plate 44 extended uprightly is fixedly set at right side end of the inside slider 41 by means of bolts 45, 45. A through hole 44a is set at almost the same level as the level of the through hole of the cylinder supporting plate 42c of the outside slider 42 at upper part of the handle supporting plate 44. The through hole 44a is mounted with the rear end of a bearing metal 47. The bearing metal 47 is further mounted in the central hole of a bearing metal set ring 49 fixed to the handle supporting plate 44 by means of bolts 48, 48. A female screw is provided in the through hole of the bearing metal 47. The female screw is fitted with male screw of a fine control screw shaft 50. The fine control screw shaft 50 is fixed with a cylindrical piston 52 at the tip end of said fine control screw shaft 50. Said piston 52 is freely inserted into the through hole 44a of the handle supporting plate 44 and it is possible to go forward and backward in the hydraulic cylinder 43.

The base end of the fine control screw shaft 50 is fixed to the left and right fine control handle 53. The left and right fine control handle 53 is rotatively fitted to the outer circumference of the bearing metal set ring 49. The outer circumference of the left and right fine control handle 53 is engraved with knurl.

When the left and the right fine control handle 53 is rotated the fine control screw shaft 50 is rotated. The fine control screw shaft 50 moves to left or right direction, because the mail screw of the fine control screw shaft is screwed to the female screw of the bearing metal 47. Accordingly, the piston 52 moves to left or right direction to go forward or backward in the hydraulic cylinder 43.

One end of a connected hose 55 is communicated to a hose fitting claw part 43b communicated to an oil chamber of the hydraulic cylinder 43 through a narrow hole. The other end of the hose 55 is communicated to a X coordinate hydraulic cylinder 73 of the left and right directions fine control of the micromanipulator 2.

The forward and backward fine control operation mechanism 39 which contacts an operation bar 29 of said forward and backward fine control lever 24 is also comprised like aforementioned left and right directions fine control operation mechanism 38. When a forward and backward fine control handle 57 is rotated, the fine control screw shaft 50 is moved in forward and backward directions and accordingly the piston 52 is also moved in forward and backward directions.

One end of the communication hose 58 is connected to a hose fitting claw part 43b of the hydraulic cylinder 43. The other end of the communication hose 58 is connected to a Y coordinate hydraulic cylinder 73 of the forward and backward directions fine control of the micromanipulator 2.

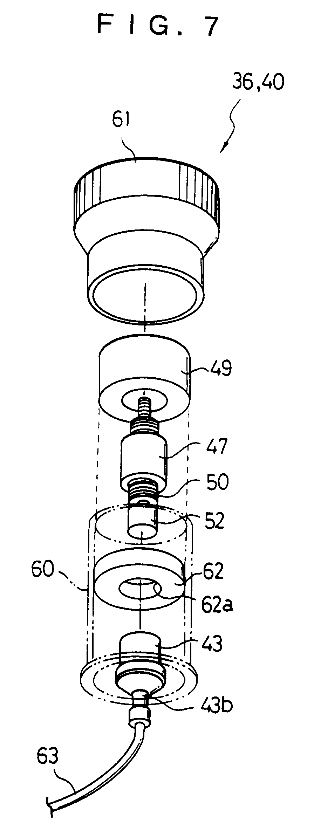

Fig. 7 is a disassembled perspective view of a vertical fine control operation mechanism 40. As shown in Fig.7, a cylindrical case 60 is vertically provided almost in the central portion of a slide plate 35 in Fig.5. The bearing metal set ring 49 is fitted to an upper circumference of the cylindrical case 60. A vertical fine control handle 61 of which outside circumference being engraved with knurl is rotatively fitted at upper end of the cylindrical case 60. The hydraulic cylinder 43 is fitted in the central hole of a cylinder supporting ring 62 fixed in the cylindrical case 6o with its outside circumference. There are no outside slider and inside slider. All other parts are comprised like the aforementioned left and right directions operation mechanism 38.

One end of a communication hose 63 is connected to the hose fitting claw part 43b of the hydraulic cylinder 43. The other end of the connection hose is connected to a Z coordinate hydraulic cylinder 73 of vertical fine control of the micromanipulator 2.

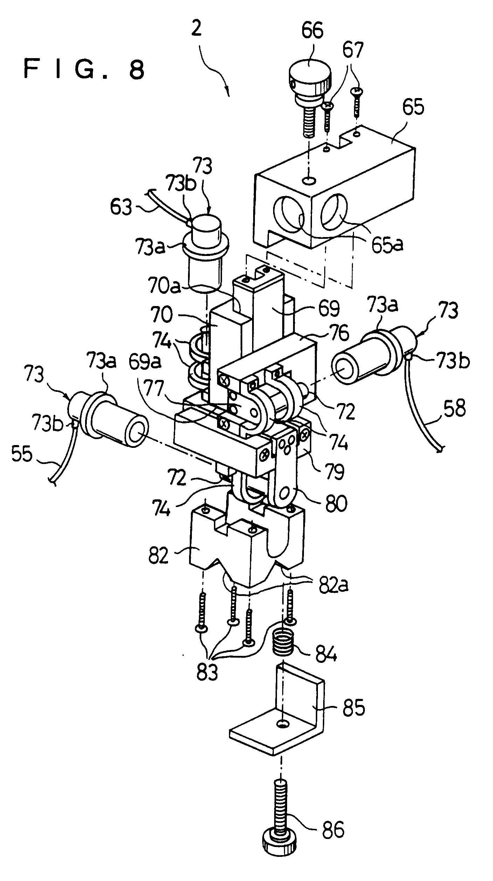

Fig.8 is a disassembled perspective view of the micromanipulator. As shown in Fig.8, the micromanipulator 2 has a fixing plate 65 provided at the side with holes 65a, 65a to insert a fitting bar 4. The inserted fixing bar 4 is tightened to an upper side of the fixing plate 65. The fixing screw 66 to fix the fixing plate 65 to a fitting bar 4 is provided. Further, the fixing plate 65 is fixed to the upper end of the Z coordinate inside slider 69 of vertical direction by means of bolts 67 provided on the upper surface of the fixing plate 65. Said Z coordinate inside slider 69 is slidably mounted in Z coordinate direction through a linearway bearing (not indicated) in the groove 70a engraved vertically in the Z coordinate outside slider 70. A tension spring (not shown) is set in a small groove engraved in Z coordinate direction in the Z coordinate inside slider 69. One end of the tension spring is fixed to the Z coordinate inside slider 69 and the other end of the tension spring is fixed to the Z coordinate outside slider 70. The tension spring always give a force of upper direction to the Z coordinate outside slider 70.

The piston fixing plate 69a is laid in the direction extending in an opposite side of the groove 70a of the Z coordinate outside slider 70 at the lower end of the Z coordinate inside slider 69. Said piston fixing plate 69a is vertically provided with a piston 72.

The hydraulic cylinder 73 having an aperture directed toward piston 72 is fixed by means of cylinder setters 74, 74 provided in parallel with a predetermined distance at an opposite side of the groove 70a of the Z coordinate outside slider 70. The hydraulic cylinder 73 presents a cylindrical shape with one side opened and having a flange part 73a in the circumference and a hose connection aperture 73b near the side of the closed side of the cylinder. The flange part 73a contacts to the side of an inside cylinder setting portion 74 and one end of the hose 63 is communicated to the hose connection aperture 73b.

Said piston 72 is movably fitted in the hydraulic cylinder 73. An oil chamber is formed between the hydraulic cylinder 73 and the piston 72. The size and contour of the oil chamber of said hydraulic cylinder are the same as the size and contour of the hydraulic cylinder 43 of the micromanipulator fine control apparatus 1. Thus the same amount of oil is housed in an ordinary case.

The front to rear direction Y coordinate outside slider 76 and the Y coordinate inside slider 77, and left to right direction X coordinate outside slider 79 and X coordinate inside slider 80 are comprised as same as the construction of the Z coordinate outside slider 70 and the Z coordinate inside slider 69, respectively. One end of said hose 58 is communicated to the hose communication aperture 73b of the hydraulic cylinder 73 fixed to Y coordinate outside slider76. The other end of said hose 55 is communicated to a hose connection aperture 73b of the hydraulic cylinder 73 of the X coordinate outside slider 79.

The Y coordinate inside slider 77 is fixed to the Z coordinate outside slider 70. The X coordinate inside slider 80 is fixed to the Y coordinate outside slider 76.

A tightening equipment fitting plate 82 is fixed by means of bolts 83, 83, 83, 83 at the lower surface of the X coordinate outside slider 79. V shape grooves 82a, 82a facing downward and crossing each other are engraved on the lower surface of said tightening equipment fitting plate 82. The tightening equipment 5 is inserted its base part into the groove 82a. Said tightening equipment 5 is fixed to the tightening equipment fitting plate 82 by means of a spring 84, a L shape set plate 85 and a tightening bolt 86.

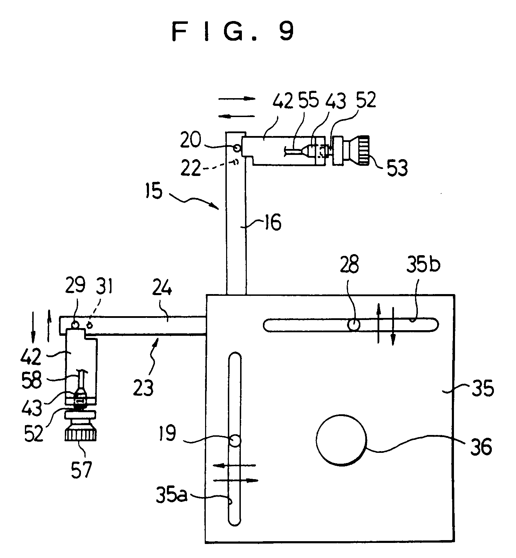

Next, work of micromanipulator fine control apparatus is explained with the accompanied drawing Fig.9.

At first, an operator moves the operating bar 36 forward. The slide plate 35 is moved forward and accordingly the lever main body 24 is moved forward around the supporting pin 31 by means of the guide pin 28 engaged with the through slot 35b. The operation bar 29 is slightly rotated rearward by action of the lever, and accordingly outside slider 42 and the hydraulic cylinder 43 are also slightly backs and the oil chamber formed between the hydraulic cylinder 43 and the piston 52 is expanded. The oil chamber formed between the Y coordinate hydraulic cylinder 73 and the piston 72 is pressed by means of the tension spring provided between the Y coordinate hydraulic cylinder 73 and the piston 72 and the oil flows into the hydraulic cylinder 43 through the hose 58 from the Y coordinate hydraulic cylinder 73.

The oil chamber between the Y coordinate hydraulic cylinder 73 and the piston 72 is narrowed and the Y coordinate outside slider 76 is slightly moved forward and the tightening equipment fitting plate 82 is also slightly moved forward.

On the other hand, when operator moves the operation bar 36 backward, the slide plate 35 moves backward and accordingly the main lever 24 rotates backward around the supporting pin 31 by means of guide pin 28 engaged with the through slot 35b. The operation bar 29 slightly rotates forward by the work of the lever of the operation bar 29 and accordingly the outside slider 42 and the hydraulic cylinder 43 also slightly moves forward and the oil chamber formed between the hydraulic cylinder 43 and the piston 52 is narrowed. Said oil chamber is pressed and the oil flows into the hydraulic cylinder 73 through the hose 58 from the hydraulic cylinder 43.

The oil chamber between the Y coordinate hydraulic cylinder 73 and the piston 72 is expanded. The Y coordinate outside slider 76 slightly moves backward and the tightening equipment fitting plate 82 also slightly moves backward.

When the operator moves the operation bar 36 in left or right direction, the slide plate 35 moves rightward and accordingly the main lever 16 rotates rightward around the supporting pin 22 by means of the guide pin 19 engaged with the through slot 35a and further the working bar 20 slightly rotates leftward by means of the lever. Accordingly, the outside slider 42 and the hydraulic cylinder 43 slightly returns backward, and the oil chamber formed between the hydraulic cylinder 43 and the piston 52 is expanded. The oil chamber between the X coordinate hydraulic cylinder 73 and the piston 72 is pressed by the work of the tension spring provided between the X coordinate outside slider 79 and the X coordinate inside slider 80 of the micromanipulator 2, and the oil immediately flows into the hydraulic cylinder 73 through the hose 55 from the X coordinate hydraulic cylinder 73.

The oil chamber between the X coordinate hydraulic cylinder 73 and the piston 72 is narrowed. The X coordinate outside slider 79 slightly moves rightward and the tightening equipment fitting plate 82 also slightly moves rightward.

On the other hand, when the operator moves the operation bar 36 leftward, the slide plate 35 moves leftward and accordingly the main lever 16 rotates leftward around the supporting pin 22 by means of the guide pin 19 engaged with the through slot 35a and further the operation bar 20 slightly moves rightward by means of the lever. The outside slider 42 and the hydraulic cylinder 43 slightly move. The oil chamber formed between the hydraulic cylinder 43 and the piston 52 is narrowed and the oil immediately flows into the hydraulic cylinder 73 through the hose 55 from the hydraulic cylinder 43.

The oil chamber between the X coordinate hydraulic cylinder 73 and the piston 72 is expanded and the X coordinate outside slider 79 is slightly moves leftward and also the tightening equipment fitting plate 82 slightly moves leftward.

Accordingly, the operator moves the slide plate 35 forward or backward and leftward or rightward by operation of the operation bar 36 seeing the microscope. Accordingly, the tip end of the glass electrode 7 held by the micromanipulator 2 is also fine controlled forward or backward and leftward or rightward. The operator can finely move the tip end of the glass electrode 7 at his most preferable direction.

As shown in Fig.6, if the operator rotates the front and rear direction handle 57, the fine control screw shaft 50 rotates and the fine control screw shaft 50 and the piston 52 move forward and backward in the hydraulic cylinder 43. Accordingly, the oil amount in the oil chamber of the hydraulic cylinder 43 is increased or decreased. Also oil amount in the oil chamber in the Y coordinate hydraulic cylinder 73 of the micromanipulator 2 is increased or decreased. The Y coordinate outside slider 76 is slightly moved forward or backward.

When the operator rotates the left and right fine control handle 53 the fine control screw shaft 50 is also rotated. The fine control screw shaft 50 and the piston 52 move in left and right directions in the hydraulic cylinder 43 and accordingly the oil amount in the oil chamber of the hydraulic cylinder 43 is increased or decreased. The oil amount in the oil chamber in the X coordinate hydraulic cylinder 73 of the micromanipulator 2 connected through the hose 55 from the hydraulic cylinder 43 also is increased or decreased. The X coordinate outside slider 79 slightly moves leftward or rightward.

As shown in Fig.7, when the operator rotates the vertical handle 61 the fine control screw shaft 50 rotates and the fine control screw shaft 50 and the piston 52 move upward and downward in the hydraulic cylinder 43. Accordingly, the oil amount in the oil chamber of the hydraulic cylinder 43 is increased or decreased. Thus oil amount in the oil chamber of the Z coordinate hydraulic cylinder 73 of the micromanipulator connected through the hose 63 from the hydraulic cylinder 43. The Z coordinate outside slider 70 slightly moves upward or downward.

In the aforementioned embodiment the grooves 9 and 10 of the base plate are located in parallel in left to right direction with a predetermined distance in front to rear direction. But it is not limited to this embodiment. Namely, the grooves 9 and 10 located in parallel in front to rear direction with a predetermined distance are allowed and said grooves are extended in left to right direction.

Further, in the aforementioned embodiment hydraulic cylinders are applied for the micromanipulator fine control apparatus. It is not limited to this embodiment. Namely, water pressure cylinders are of course applied.

In the aforementioned embodiment, one hydraulic cylinderof micromanipulator fine control apparatus and one hydraulic cylinder of micromanipulator are applied. It is of course allowed to apply plural numbers hydraulic cylinders.

In addition, the hydraulic cylinder 43 is provided to the outside slider 42 and the piston 52 is provided on the base plate 8 in the aforementioned embodiment. It is not limited to this. The piton 52 can be provided to the outside slider 42 and the hydraulic cylinder 43 can be provided to the base plate 8.

In addition, the vertical fine control operation mechanism is provided to the operation handle 36 on the slide plate 35 but it is not limited to this. The vertical fine control operation mechanism can be provided independently from the operation bar at free position on the slide plate. Further, it is of course possible to provide the vertical fine control mechanism not on the slide plate but on the base plate.

In addition, the through slots 35a and 35b are provided on the slide plate 35 in the aforementioned embodiment but it is possible to place only slots if the guide pins 19 and 28 are eangageable and movable within the slots, respectively.

As explained in aforementioned embodiment, the operator holds the operation lever vertically provided on the slide plate and moves the slide plate forward or backward or leftward or rightward. The micromanipulator and the tip end of the microtool held by the micromanipulator are moved in the same direction as the slide plate in forward and backward direction or leftward and rightward direction. The micromanipulator and the tip end of the microtool are finely controlled. Operation becomes quite easy and operation effect is greatly improved by the present invention.

It is also possible to keep a minimum fine control ratio as the fine control lever is applied according to the present invention. Operability is more and more improved.

## Claims

1. A micromanipulator fine control apparatus for finely controlling a micromanipulator (2) comprising:
first and second fine control hydraulic pressure means (38, 39) respectively in front to rear and left to right direction, providing first and second hydraulic cylinders (43), respectively connected at one end to front to rear and left to right direction fine control hydraulic cylinder (73) of the manipulator (2) through first and second hoses (55, 58), providing first and second pistons (52), movably fitted in said first and second hydraulic cylinders (43) at the other end, and characterized by:
a base plate (8) provided with two grooves (9 and 10) engraved in left to right direction in parallel with a predetermined distance in front to rear direction,
a slide frame (33) including two slide bars (33a, 33b) which are slidably fitted to the two grooves (9, 10) of the base plate (8) at lower part, respectively, and has two guide plates (33c, 33d) provided in parallel with a predetermined distance connecting the two slide bars (33a, 33b) at upper part,
a slide plate (35) provided with an upright operation handle (36) on upper surface, the slide plate (35) being slidably fitted in opposite insides of the two guide plates (33c, 33d) of the slide frame (33), respectively, having a first through slot (35b) extended in left to right direction at rear or front side, also having a second through slot (35a) extended in front to rear direction at left or right side,
a first lever (23) of which base part is rotatively supported by a first supporting point (31) vertically provided near left end or right end of a first recessed part (13) of almost square shape engraved in left or right direction on said base plate (8), having a first notch at central part and providing vertically a first guide pin (28) which slidably engages in the first through slot (35b) at its foremost end,
a first movable member (25) movably fitted in longitudinal direction in the first lever(23) at base part near the first supporting point pin (31) and provided with a first working pin (29) uprightly at rear end,
a first fine control ratio adjustment screw member (26) located between the rear end of said first lever (23) and the rear end of said first movable member (25) to adjust and fix the movable amount of the first movable member (25) and also adjust the distance between the first supporting point pin (31) and the first working pin (29),
a first slider (42) contacting the first working pin (29) of the first movable member (25) at its base part and slidably fitted in front and rear direction in a first engagement part extended in front and rear direction in said base plate (8),
the fine control hydraulic pressure means (39) in front to rear direction existing between the foremost tip end of said first slider (42) and said base plate (8), the fluid amounts in the first hydraulic cylinder (43) being increased or decreased by means of movement of the first slider (42),
a second lever (15) including the base part (16a) rotatively supported by the second supporting point pin (22) vertically provided near rear end of a second recessed part (12) of almost rectangular shape engraved in the base plate (8) from lower position to rearward of said base plate (8), having a second notch crossable to the first notch of the first lever (23) at the center and vertically provided a second guide pin (19) movably engaged in the second through slot (35a) at foremost end,
a second fine control adjustment screw member (18) movably fitted in longitudinal direction on upper part of the base part (16a) of said second lever (15) near the second supporting point pin (22) and a second movable member (17) vertically provided with the second working pin (20) at rear end, locating between the rear end of the second lever (15) and the rear end of the second movable member (17) to adjust and fix the movable amounts of the second movable member (17) and adjust the distance between the second supporting point (22) and the second working pin (20),
a second slider (42), the base part of which contacts the second working pin (20) of said second movable member (17), fitting slidably in front to rear direction in a second engagement part extended in left to right direction of said base plate (8),
a fine control hydraulic pressure means (38) of left and right direction existing between the foremost end of said second slider (42) and said base plate (8), the fluid amounts in the second hydraulic cylinder (43), being increased or decreased by means of movement of the second slider (42), and
when said slide plate (35) is moved in front to rear direction and left to right direction by handling the operation handle (36) of said slide plate (35), said first lever (23) is rotated in front to rear direction around the first supporting point pin (31) by means of the first guide pin (28) engaged in said first through slot (35b); and said second lever (15) is rotated in left to right direction around the second supporting point pin (22) by means of the second guide pin (19) engaged in said second through slot (35a); said first working pin moves the first slider (42) to increase or decrease the liquid amounts in the first hydraulic cylinder (43); said second working pin moves the second slider (42) to increase or decrease the liquid amounts in the second hydraulic cylinder (43); and then the micromanipulator (2) is finely moved in front to rear direction and in left to right direction corresponding to the movement of the slide plate (35).

2. A micromanipulator fine control apparatus according to claim 1 wherein the base plate has two grooves (9, 10) engraved in front to rear direction in parallel with a predetermined distance in left to right direction.

3. A micromanipulator fine control apparatus according to claim 1 wherein said first piston (52) of the front to rear direction fine control hydraulic pressure means (39) is fixedly mounted at foremost end of a first fine control screw shaft (50) which fits to a first bearing metal (47) fixedly mounted on said base plate (8) or the first slider (42), the base end of the first fine control screw shaft (50) being fixedly mounted to a front to rear direction fine control handle (57) which can be rotated to move said first piston (52) in forward and backward direction in the first hydraulic cylinder (43), also the second piston (52) of the left to right direction fine control hydraulic pressure means (38) is fixedly mounted at foremost end of a second fine control screw shaft (59) which fits to a second bearing metal (47) fixedly mounted on said base plate (8) or the second slider (42), the base end of the second fine control screw shaft (50) being fixedly mounted to a left to right fine control handle (53) which can be rotated to move said second piston (52) in forward and backward direction in the second hydraulic cylinder (43).

4. A micromanipulator fine control apparatus according to claim 1 comprising a vertical fine control hydraulic pressure means (40) to fine control the micromanipulator (2) in vertical direction on the operation handle (36) of the slide plate (35), a third hydraulic cylinder (43) which communicates to a vertical direction fine control hydraulic cylinder (73) of the micromanipulator (2) through a third hose (63) being fixedly mounted to the operation handle (36), a third piston (52) which slidably fits in the third hydraulic cylinder (43), being fixedly mounted to the foremost end of the third fine control screw shaft (50) which fits in the third bearing metal (47) fixedly mounted to the operation handle (36), the base end of the third fine control screw shaft (50) being fixedly mounted to the vertical direction fine control handle (36) which can be rotated to move the third piston (52) in forward and backward direction in the third hydraulic cylinder (43).

## Patentansprüche

1. Feineinstelleinrichtung für einen Mikromanipulator, um die Feineinstellung eines Mikromanipulators (2) zu steuern, umfassend:
erste und zweite Hydraulikdruck-Feineinstellmittel (38, 39) in Vorwärts-Rückwärts- bzw. in Links-Rechts-Richtung, die erste und zweite Hydraulikzylinder (43) bereitstellen, die über einen ersten und einen zweiten Schlauch (55, 58) an ein Ende des Vorwärts-Rückwärts-Richtungs- bzw. des Links-Rechts-Richtungs-Feineinstell-Hydraulikzylinders (73) des Manipulators (2) angeschlossen sind, wobei erste und zweite Kolben (52) bereitgestellt werden, die am anderen Ende beweglich in die ersten und zweiten Hydraulikzylinder (43) eingepaßt sind, und gekennzeichnet durch:
eine Basisplatte (8), die mit zwei parallelen von links nach rechts eingearbeiteten Rillen (9 und 10) versehen ist, wobei die Rillen einen vorbestimmten Abstand in Vorwärts-Rückwärts-Richtung aufweisen,
einen Gleitrahmen (33), der zwei Gleitstäbe (33a, 33b) umfaßt, die jeweils am unteren Teil in Gleitpassung in den beiden Rillen (9, 10) der Basisplatte (8) angebracht sind, und zwei parallel in einem vorbestimmten Abstand vorgesehene Führungsplatten (33c, 33d) aufweist, die die beiden Gleitstäbe (33a, 33b) am oberen Teil verbinden,
eine Gleitplatte (35), die mit einem aufrechten Betätigungsgriff (36) an der Deckfläche versehen ist, wobei sich die Gleitplatte (35) jeweils in Gleitpassung an gegenüberliegenden Innenseiten der beiden Führungsplatten (33c, 33d) des Gleitrahmens (33) befindet, und einen ersten Durchgangsschlitz (35b) aufweist, der sich an der Vorder- oder Rückseite in Links-Rechts-Richtung erstreckt, und auch einen zweiten Durchgangsschlitz (35a) aufweist, der sich an der linken oder der rechten Seite in Vorwärts-Rückwärts-Richtung erstreckt,
einen ersten Hebel (23), dessen Basisteil von einem ersten Haltepunkt (31) drehbar gehalten wird, der vertikal nahe dem linken Ende oder rechten Ende eines ersten Ausnehmungsteils (13) mit annähernd rechteckiger Gestalt vorgesehen ist, der in Links- oder Rechts-Richtung auf der Basisplatte (8) eingearbeitet ist, und der eine erste Kerbe in einem Mittelteil aufweist und vertikal einen ersten Führungsstift (28) bereitstellt, der sich an seinem Vorderende in Gleiteingriff im ersten Durchgangsschlitz (35b) befindet;
ein erstes bewegliches Element (25), das in Längsrichtung beweglich am ersten Hebel (23) im Basisteil nahe dem ersten Haltepunktstift (31) eingepaßt und am hinteren Ende mit einem ersten aufrechten Arbeitsstift (29) versehen ist,
ein erstes Feineinstellverhältnis-Einstellschraubenelement (26), das sich zwischen dem hinteren Ende des ersten Hebels (23) und dem hinteren Ende des ersten beweglichen Elements (25) befindet, um das Bewegungsausmaß des ersten beweglichen Elements (25) einzustellen und zu fixieren und auch den Abstand zwischen dem ersten Haltepunktstift (31) und dem ersten Arbeitsstift (29) einzustellen,
ein erstes Gleitstück (42), das den ersten Arbeitsstift (29) des ersten beweglichen Elements (25) an seinem Basisteil berührt und sich in Gleitpassung in Vorwärts- und Rückwärtsrichtung in einem ersten Eingriffteil befindet, der sich in Vorwärts- und Rückwärts-Richtung in der Basisplatte (8) erstreckt;
wobei sich das Feineinstell-Hydraulikdruckmittel (39) in Vorwärts-Rückwärts-Richtung zwischen dem vordersten Spitzenende des ersten Gleitstücks (42) und der Basisplatte (8) befindet, wobei die Fluidmengen im ersten Hydraulikzylinder (423) durch Bewegung des ersten Gleitstücks (42) vergrößert oder verringert werden;
einen zweiten Hebel (15), der den Basisteil (16a) umfaßt, der drehbar vom zweiten Haltepunktstift (22) gehalten wird, der vertikal nahe dem hinteren Ende eines zweiten Ausnehmungsteils (12) mit annähernd rechteckiger Gestalt vorgesehen ist, der in der Basisplatte (8) von einer unteren Position zur Rückseite der Basisplatte (8) eingearbeitet ist, der eine zweite Kerbe aufweist, die sich mit der ersten Kerbe des ersten Hebels (23) in der Mitte kreuzen kann, und vertikal einen zweiten Führungsstift (19) bereitstellt, der sich am vorderen Ende in Bewegungseingriff im zweiten Durchgangsschlitz (35a) befindet,
ein zweites Feineinstell-Einstellschraubenelement (18), das sich in Bewegungseingriff in Längsrichtung am oberen Teil des Basisteils (16a) des zweiten Hebels (15) nahe dem zweiten Haltepunktstift (22) befindet, und ein zweites bewegliches Element (17), das am hinteren Ende vertikal mit dem zweiten Arbeitsstift (20) versehen ist, angeordnet zwischen dem hinteren Ende des zweiten Hebels (15) und dem hinteren Ende des zweiten beweglichen Elements (17), um die Bewegungsausmaße des zweiten beweglichen Elements (17) einzustellen und zu fixieren und den Abstand zwischen dem zweiten Haltepunkt (22) und dem zweiten Arbeitsstift (20) einzustellen;
ein zweites Gleitstück (42), dessen Basisteil den zweiten Arbeitsstift (20) des zweiten beweglichen Elements (17) berührt, in Gleitpassung in Vorwärts-Rückwärts-Richtung in einem zweiten Eingriffsteil, der sich in Links-Rechts-Richtung der Basisplatte (8) erstreckt;
ein Feineinstell-Hydraulikdruckmittel (38) für Links-Rechts-Richtung, das sich zwischen dem vordersten Ende des zweiten Gleitstücks (42) und der Basisplatte (8) befindet, wobei die Fluidmengen im zweiten Hydraulikzylinder (43) durch Bewegung des zweiten Gleitstücks (42) vergrößert oder verkleinert werden und
wenn die Gleitplatte (35) durch Betätigung des Betätigungsgriffs (36) der Gleitplatte (35) in Vorwärts-Rückwärts-Richtung und Links-Rechts-Richtung bewegt wird, der erste Hebel (23) durch den ersten Führungsstift (28), der sich im ersten Durchgangsschlitz (35b) in Eingriff befindet, in Vorwärts-Rückwärts-Richtung um den ersten Haltepunktstift (31) gedreht wird; und der zweite Hebel (15) durch den zweiten Führungsstift (14), der sich im zweiten Durchgangsschlitz (35a) in Eingriff befindet, in Links-Rechts-Richtung um den zweiten Haltepunktstift (22) gedreht wird; der erste Arbeitsstift das erste Gleitstück (42) bewegt, um die Flüssigkeitsmengen im ersten Hydraulikzylinder (43) zu vergrößern oder zu verringern; der zweite Arbeitsstift das zweite Gleitstück (42) bewegt, um die Flüssigkeitsmengen im zweiten Hydraulikzylinder (43) zu vergrößern oder zu verringern; und der Mikromanipulator (2) dann entsprechend der Bewegung der Gleitplatte (35) sehr fein in Vorwärts-Rückwärts-Richtung und Links-Rechts-Richtung bewegt wird.

2. Feineinstelleinrichtung für einen Mikromanipulator nach Anspruch 1, worin die Basisplatte zwei Rillen (9, 10) aufweist, die in Vorwärts-Rückwärts-Richtung parallel und in einem vorbestimmten Abstand in Links-Rechts-Richtung zueinander eingearbeitet sind.

3. Feineinstelleinrichtung für einen Mikromanipulator nach Anspruch 1, worin der erste Kolben (52) des Vorwärts-Rückwärts-Feineinstell-Hydraulikdruckmittels (39) fix am vordersten Ende einer ersten Feineinstellschraubenwelle (50) montiert ist, die an ein erstes Metall-Lager (47) paßt, das fix auf der Basisplatte (8) des ersten Gleitstücks (42) montiert ist, wobei das Basisende der ersten Feineinstellschraubenwelle (50) fix an einem Vorwärts-Rückwärts- Feineinstellgriff (57) montiert ist, der gedreht werden kann, um den ersten Kolben (52) im ersten Hydraulikzylinder (43) in Vorwärts-Rückwärts-Richtung zu bewegen, auch der zweite Kolben (52) des Links-Rechts-Feineinstell-Hydraulikdruckmittels (38) fix am vordersten Ende einer zweiten Feineinstellschraubenwelle (50) montiert ist, die an ein zweites Metall-Lager (47) paßt, das fix an der Basisplatte (8) oder dem zweiten Gleitstück (42) montiert ist, wobei das Basisende der zweiten Feineinstellschraubenwelle (50) fix an einem Links-Rechts-Feineinstellgriff (53) montiert ist, der gedreht werden kann, um den zweiten Kolben (52) in Vorwärts-Rückwärts-Richtung im zweiten Hydraulikzylinder (43) zu bewegen.

4. Feineinstelleinrichtung für einen Mikromanipulator nach Anspruch 1, umfassend ein Vertikal-FeineinstellHydraulikdruckmittel (40), um am Mikromanipulator (2) am Betätigungsgriff (36) der Gleitplatte (35) Feineinstellung in vertikaler Richtung vorzunehmen; einen dritten Hyraulikzylinder (43), der durch einen dritten Schlauch (63) der fix am Betätigungsgriff (36) montiert ist, mit einem Vertikalrichtungs-Feineinstell-Hydraulikzylinder (73) des Mikromanipulators (2) kommuniziert; einen dritten Kolben (52) in Gleitpassung im dritten Hydraulikzylinder (43), der fix am vordersten Ende einer dritten Feineinstellschraubenwelle (50) montiert ist, die in ein drittes Metall-Lager (47) paßt, und fix am Betätigungsgriff (36) montiert ist, wobei das Basisende der dritten Feineinstellschraubenwelle (50) fix am Vertikalrichtungs-Feineinstellgriff (36) montiert ist, der gedreht werden kann, um den dritten Kolben (52) in Vorwärts-Rückwärts-Richtung im dritten Hydraulikzylinder (43) zu bewegen.

## Revendications

1. Appareil de réglage fin pour micromanipulateur pour régler finement un micromanipulateur (2) comprenant :
des premier et deuxième moyens à pression hydraulique de réglage fin (38, 39) respectivement dans des directions avant-arrière et gauche-droite, en prévoyant des premier et deuxième cylindres hydrauliques (43), respectivement connectés à une extrémité au cylindre hydraulique de réglage fin (73) de la direction avant-arrière et gauche-droite du manipulateur (2) par des premier et deuxième tuyaux (55, 58), en prévoyant des premier et deuxième pistons (52) installés d'une manière mobile dans lesdits premier et deuxième cylindres hydrauliques (43) a l'autre extrémité et caractérisé par :
une plaque de base (8) pourvue de deux rainures (9 et 10) ménagées dans la direction gauche-droite en parallèle avec une distance prédéterminée à la direction avant-arrière ;
un châssis de coulissement (33) incluant deux barres de coulissement (33a, 33b) qui sont insérées d'une manière coulissante dans les deux rainures (9, 10) de la plaque de base (8) à la partie inférieure, respectivement, et qui présente deux plaques de guidage (33c, 33d) réalisées parallèlement à une distance prédéterminée reliant les deux barres de coulissement (33a, 33b) à la partie supérieure,
une place de coulissement (35) présentant une poignée de fonctionnement debout (36) sur la surface supérieure, la plaque de coulissement (35) étant insérée d'une manière coulissante dans les intérieurs opposés des deux plaques de guidage (33c, 33d) du châssis de coulissement (33), respectivement, comportant une première fente traversante (35b) s'étendant dans la direction gauche-droite au côté arrière ou avant, présentant également une deuxième fente traversante (35a) s'étendant dans la direction avant-arrière au côté gauche ou droit,
un premier levier (23) dont la partie de base est supportée d'une manière rotative par un premier point de support (31) réalisé verticalement près de l'extrémité gauche ou extrémité droite d'une première partie évidée (13) d'une forme presque carrée ménagée dans la direction gauche ou droite sur ladite plaque de base (8), ayant une première encoche à une partie centrale et prévoyant verticalement un premier axe de guidage (28) qui s'engage d'une manière coulissante dans la première fente traversante (35b) à son extrémité la plus avant,
un premier élément mobile (25) inséré d'une manière mobile dans la direction longitudinale (10), le premier levier (23) à la partie de base près du premier point de support (31) et pourvu d'un premier axe de travail (29) debout à l'extrémité arrière,
un premier élément de tige de réglage de rapport de commande fin (26) situé entre l'extrémité arrière dudit premier levier (23) et l'extrémité arrière dudit premier élément mobile (25) pour ajuster et fixer la quantité mobile du premier élément mobile (25) et pour ajuster également la distance entre le premier axe de point de support (31) et le premier axe de travail (29),
un premier élément coulissant (42) venant en contact avec le premier axe de travail (29) du premier élément mobile (25) à sa partie de base et inséré d'une manière coulissante dans la direction avant et arrière dans une première pièce d'engagement s'étendant dans la direction avant et arrière dans ladite plaque de base (8),
le moyen à pression hydraulique de réglage fin (39) dans la direction avant-arrière existant entre l'extrémité de pointe la plus avant dudit premier élément coulissant (42) et ladite plaque de base (8), les quantités de fluide dans le premier cylindre hydraulique (43) étant augmentées ou diminuées au moyen du déplacement du premier élément coulissant (42),
un deuxième levier (15) incluant la pièce de base (16a) supportée d'une manière rotative par le deuxième axe de point de support (22) prévu verticalement près de l'extrémité arrière d'une deuxième partie évidée (12) d'une forme presque rectangulaire ménagée dans la plaque de base (8) d'une position inférieure vers l'arrière de ladite plaque de base (8) ayant une deuxième encoche pouvant croiser la première encoche du premier levier (23) au centre et en prévoyant verticalement un deuxième axe de guidage (19) engagé d'une manière mobile dans la deuxième fente traversante (35a) à l'extrémité la plus avant,
un deuxième élément de vis d'ajustement de réglage fin (18) installé d'une manière mobile dans la direction longitudinale sur la partie supérieure de la partie de base (16a) du deuxième levier précité (15), près du deuxième axe de point de support (22), et un deuxième élément mobile (17) pourvu verticalement du deuxième axe de travail (20) à l'extrémité arrière, situé entre l'extrémité arrière du deuxième levier (15) et l'extrémité arrière du deuxième élément mobile (17) pour ajuster et fixer les quantités mobiles du deuxième élément mobile (17) et pour régler la distance entre le deuxième point de support (22) et le deuxième axe de travail (20),
un deuxième élément coulissant (42) dont la partie de base vient en contact avec le deuxième axe de travail (20) dudit deuxième élément mobile (17), inséré d'une manière coulissante dans la direction avant-arrière dans la deuxième pièce d'engagement s'étendant dans la direction gauche-droite de ladite plaque de base (8),
un moyen à pression hydraulique de réglage fin (38) d'une direction gauche et droite existant entre l'extrémité la plus avant dudit deuxième élément coulissant (42) et de ladite plaque de base (8), les quantités de fluide dans le deuxième vérin hydraulique (43) étant augmentées ou diminuées au moyen du déplacement du deuxième élément coulissant (42) et
lorsque ladite plaque de base (35) est déplacée dans la direction avant-arrière et la direction gauche-droite en manipulant le levier d'actionnement (36) de ladite plaque de coulissement (35), ledit premier levier (23) est amené à tourner dans la direction avant-arrière autour du premier axe de point de support (31) au moyen du premier axe de guidage (28) engagé dans ladite première fente traversante (35b), et ledit deuxième levier (15) est amené à tourner dans la direction gauche-droite autour du deuxième axe de point de support (22) au moyen du deuxième axe de guidage (14) engagé dans ladite deuxième fente traversante (35a), ledit premier axe de travail déplaçant le premier élément coulissant (42) afin d'augmenter ou de diminuer les quantités de liquide dans le premier cylindre hydraulique (43) ; ledit deuxième axe de travail déplaçant le deuxième élément coulissant (42) pour augmenter ou diminuer les quantités de liquide dans le deuxième cylindre hydraulique (43), et ensuite le micromanipulateur (2) est déplacé finement dans la direction avant-arrière et dans la direction gauche-droite correspondant au déplacement de la plaque coulissante (35).

2. Appareil de réglage fin pour micromanipulateur selon la revendication 1, où la plaque de base a deux rainures (9, 10) ménagées dans la direction avant-arrière parallèlement à une distance prédéterminée dans la direction gauche-droite.

3. Appareil de réglage fin pour micromanipulateur selon la revendication 1, où ledit premier piston (52) du moyen à pression hydraulique de réglage fin (39) de la direction avant-arrière est installé fixement à l'extrémité la plus avant d'une première tige filetée de réglage fin (50) qui est insérée dans un premier métal de support (47) monté fixement sur ladite plaque de base (8) ou le premier élément coulissant (42), l'extrémité de base de la première tige filetée de réglage fin (50) étant montée fixement sur une poignée de réglage fin (57) de la direction avant-arrière qui peut être amenée à tourner pour déplacer ledit premier piston (52) dans la direction avant et arrière dans le premier cylindre hydraulique (43), également le deuxième piston (52) du moyen à pression hydraulique de réglage fin (38) de la direction gauche-droite est installé fixement à l'extrémité la plus avant d'une deuxième tige filetée de réglage fin (59) qui est insérée dans un deuxième métal de support (47) monté fixement sur ladite plaque de base (8) ou le deuxième élément coulissant (42), l'extrémité de base de la deuxième tige filetée de réglage fin (50) étant installée fixement sur une poignée de réglage fin gauche-droite (53) qui peut être amenée à tourner afin de déplacer ledit deuxième piston (52) dans la direction avant et arrière dans le deuxième cylindrique hydraulique (43).

4. Appareil de réglage fin pour micromanipulateur selon la revendication 1, comprenant un moyen à pression hydraulique de réglage fin vertical (40) pour régler finement le micromanipulateur (2) dans la direction verticale sur la poignée d'actionnement (36) de la plaque coulissante (35), un troisième cylindre hydraulique (43) qui communique avec un cylindre hydraulique de réglage fin (73) de direction verticale du micromanipulateur (2) par un troisième tuyau (63) monté fixement sur la poignée d'actionnement (36), un troisième piston (52) qui est inséré d'une manière coulissante dans le troisième cylindre hydraulique (43) étant monté fixement sur l'extrémité la plus avant de la troisième tige filetée de réglage fin (50) qui est insérée dans le troisième métal de support (47) installé fixement sur la poignée d'actionnement (36), l'extrémité de base de la troisième tige filetée de réglage fin (50) étant montée fixement sur la poignée de réglage fin (36) de la direction verticale qui peut être amenée à tourner pour déplacer le troisième piston (52) dans la direction avant et arrière dans le troisième cylindre hydraulique (43).
